# EUROPEAN PATENT APPLICATION

(11) **EP 3 057 319 A1**
(43) Date of publication of application: **17.08.2016**
(21) Application number: 15305190.9
(22) Date of filing: 10.02.2015
(51) Int. Cl.: H04N 19/105, H04N 21/2343, H04N 21/262, H04N 21/6373, H04N 21/845, H04N 19/172, H04N 19/51, H04N 19/30, H04N 19/164, H04N 19/177, H04N 19/59

(54) **Adaptive resolution video decoder**

(71) Applicant: Harmonic Inc., San Jose, CA 95134 (US)
(72) Inventor: Gendron, Patrick, 35410 CHATEAUGIRON (FR); Ducloux, Xavier, 35200 RENNES (FR); Perron, Claude, 35830 BETTON (FR)
(74) Representative: Nguyen Van Yen, Christian

(57) **Abstract**

The invention relates to a method and a device for decoding video content compressed using a full open GOP scheme wherein some GOPs have different resolutions.

The invention comprises the rescaling of at least a frame that serves as reference to a bi-directional frame in a GOP having a different resolution, and the decoding of said bi-directional frame using the rescaled frame.

## Description

### FIELD OF THE INVENTION

The present invention relates to the distribution of multimedia content on the internet. More specifically it relates to the distribution of live OTT (Over The Top) video content.

### BACKGROUND PRIOR ART

Historically, live multimedia content was delivered through managed networks, for example IPTV delivery, where Quality of Service (Qos) can be guaranteed. There is today a strong increase of the access to live multimedia content through OTT delivery. In OTT delivery, the content is accessed through a non-managed internet communication that does not guarantee any sustained transfer bitrate. As a consequence of that, in an OTT delivery system, a client will access multimedia content by downloading successions of small files containing portions of its content. Then, the video reproduction device plays the concatenation of these small files, having potentially different audio/video features to cope with the instantaneous network throughputs. This method of delivering video files having non-constant bitrate is known as adaptive streaming. In some embodiments, notably those which comply with the MPEG-DASH standard, this elementary unit of delivery of OTT content is called a segment, which can, for example, be a file which is downloaded by a video reproduction device. When these segments are produced in real time, the combination of real time production, downloading and playing of small files allows the access to live content with a minimum delay between content production and reception.

OTT delivery and adaptive streaming technologies are currently growing quickly because they provide a lot of flexibility by allowing the delivery of content (on demand and live) on any platform without the need for a specific network infrastructure. Numerous technologies, all based on adaptive streaming, allow the access of live content using OTT delivery. Among them, HLS developed by Apple, HDS developed by Adobe, Smooth Streaming developed by Microsoft, or MPEG Dash standardized by the ISO/CEN MPEG organization.

For live content distribution, a key aspect in content delivery is latency. Latency is the time difference between the time at which content is acquired, and the time the content is displayed. In the case of OTT delivery, the latency comprises the source encoding of the media, the segmentation process to cut the encoded media into individual segments (files), the time to deliver the segment across an internet network, and the time to decode and display the segment. Several of these previously mentioned tasks imply some buffering of one or several elementary units that can often correspond to one segment. Thus, there is a rather strict relationship between the segment duration, and therefore the number of pictures in a segment, and the end-to-end latency in an OTT delivery system. Indeed on a non-managed IP network, some nodes of the network may buffer segments as the available bandwidth is not guaranteed. This increases latency proportionally to the size of said segments. Typical latencies are today 30-60 seconds for OTT video delivery, while it is less than 10 seconds for IPTV delivery or on traditional broadcasting like DTT (Digital Terrestrial TV) or Satellite DTH (Direct To Home).

There is therefore a need to reduce the size of segments in order to reduce the latency of live OTT video delivery. In a usual OTT scheme, video content within a segment contains at least one GOP (Group Of Pictures) comprising one I-frame, in order to be able to start video playback at the reception of this single segment. Therefore, shortening the size of segments induces the use of few GOPs per segment (down to 1 GOP) per segment as well as relatively short GOPs.

Meanwhile, one of the features of adaptive streaming technologies used in OTT video delivery is the ability to provide several segments available for the same part of the video, each segment containing the video encoded with different parameters. These different parameters may include various bitrates, resolutions, video codecs, etc... For example, a part of the video may be available in segments encoded in 720p at 1 Mbps, 2Mbps and 5Mbps, and in 1080p in 2 Mbps, 5 Mbps and 10 Mbps. The video reproducing device is then able to pick up (download from the server) the segment which best suits its needs at a moment in time. This feature is very useful when the video is delivered through a network with variations of the bandwidth, which often occurs for OTT delivery, which uses very different networks such as ADSL, 3G, 4G, Indoor WIFI, etc... Indeed, the client is able to get at any time the segment with the best quality available that can be delivered in real time. In case of variations of the bandwidth, a client can request segments which are encoded with various bitrates. In case of severe variations of the bandwidth, when the bitrate change is very important it may even be preferable to switch from one video resolution to another to preserve a certain quality of the rendered content. For example, this network condition evolution may lead to switching to segments encoded with a lower resolution in case of severe reduction of the available bandwidth, and switching to segments of higher resolution in case of large increase of the available bandwidth.

Conventional video coding methods use three types of frames: I or Intra-predicted frames, P or Predicted frames, and B or bi-directional frames. I frames can be decoded independently, like a static image. P frames use reference frames that are previously displayed, and B frames use reference frames that are displayed prior to and/or later than the B frame to be encoded. The use of reference frames notably consists of predicting image blocks as a combination of blocks in reference frames, and encoding only the difference between a block in the current frame and the combination of blocks from reference frames.

A GOP is defined as the Group of Pictures between one I-frame and the next one in encoding/decoding order. In the prior art, the ability to switch between resolutions is only available using an encoding scheme called "closed GOP" at segment boundaries. Closed GOP refers to any block based encoding scheme wherein the information to decode a GOP is self-contained. This means that a GOP contains one I-frame, P-frames that only reference the I-frame and P frames within the GOP, and B-frames that only reference frames within the GOP. Thus, there is no need to get any reference frame from a previous GOP to decode the current GOP. When such a "Closed GOP" scheme is used at a segment boundary, it means that the first GOP of a new segment, does not need any information from the previous GOP which belongs to the previous segment. By contrast, in the coding scheme called Open GOP, the first B frames in a current GOP which are displayed before the I-frame can reference frames from previous GOPs. In state of the art implementations of an OTT scheme based on adaptive streaming technologies, an Open GOP coding scheme is used inside a segment if it contains several GOPs, but it is not possible to use an Open GOP coding scheme for the first GOP of each segment to allow switching between resolutions at segment boundaries. Indeed, a B frame in an Open GOP after a switch of resolutions would reference frames in the previous GOP that have a different resolution. This would lead to an inconsistency at the time of performing video decoding. To obtain consistent reference frames for the first B frames in a GOP after a switch, the player would need to request the previous segment in the resolution of the new segment, which is practically not feasible if bandwidth is constrained.

To enable high quality video delivery in OTT, it is always challenging to find the best compromise between latency and quality of the video. Indeed, using a closed GOP encoding scheme with short segments leads to poor video compression quality experience: this may cause visible quality changes between successive GOPs since there are no B frames to link the two GOPs by using reference frames in each of them.

In order to solve the problems listed above, there is a need for a device and a method of video decoding which can process video segments of various resolutions comprising GOP encoded with an Open GOP scheme.

### SUMMARY OF THE INVENTION

To this effect, the invention discloses a method for decoding a compressed video content, said compressed video content comprising two groups of pictures, each group of pictures comprising pictures at a defined resolution, said method comprising: a first step for receiving an information relative to at least one of a defined resolution and a change of a defined resolution between a first group and a second group of pictures, said first group of pictures having a first defined resolution and said second group of pictures having a second defined resolution different from the first defined resolution; a second step for creating a rescaled frame by rescaling a frame in the first group of pictures which serves as reference to at least a frame in the second group of pictures, from the first defined resolution to the second defined resolution; a third step for decoding the frame in the second group of pictures using the rescaled frame at the second defined resolution.

Advantageously, the second step comprises an up-scaling if the second defined resolution is higher than the first defined resolution, and a downscaling if the second defined resolution is lower than the first defined resolution.

In an embodiment of the invention, the re-scaling is performed using an algorithm comprised in a group of algorithms comprising at least one of a bilinear interpolation, bi-cubic interpolation, nearest neighbor interpolation, polyphase filtering and Lanczos filtering.

Advantageously, the third step comprises the use of a rescaled frame at the input of a motion compensation method.

In an embodiment of the invention, the second step comprises re-scaling all decoded frames present in a decoded pictures buffer of a video decoder.

Advantageously, the frame in the second group of pictures is compressed using a motion compensated Inter-frame prediction algorithm.

In an embodiment of the invention, the video content is compressed using a standard comprised in a group of video standards comprising MPEG-2 Video, AVC/H.264, HEVC/H.265, VP8, VP9.

The invention also discloses a video decoding device configured to decode a compressed video content, said compressed video content comprising two groups of pictures, said video decoding device comprising: a first buffer configured to store decoded frames; a first module configured to perform a motion compensation; a second module configured to: receive an information relative to at least one of a defined resolution and a change of a defined resolution of a first group and a second group of pictures, said first group of pictures having a first defined resolution and said second group of pictures having a second defined resolution different from the first defined resolution; create at least a rescaled frame by performing a rescaling, from the first defined resolution to the second defined resolution, of at least a frame in the first group of pictures which serves as reference to at least a frame in the second group of pictures; said video decoding device being further configured to decode the at least a frame in the second group of pictures using the at least a rescaled frame at the second defined resolution.

In an embodiment of the invention, the video decoding device further comprises one of: a third module configured to perform entropy decoding; a fourth module configured to perform at least one of an inverse quantization and an inverse transform; a fifth module configured to perform filtering, and the output of the second module is input to the fifth module.

In an embodiment of the invention, the output of the second module is stored in a second buffer.

The invention also discloses a video reproduction device comprising a video decoding device according to the invention, the video decoding device comprising: a first additional module configured to control reception of the video content; a second additional module configured to one of access and receive video content using an internet protocol.

In an embodiment of the invention, the first additional module is configured to monitor reception of segments of video content whose resolution depends of an evaluation of the available bandwidth.

Advantageously, the first additional module is configured to adapt resolution of segments according to a duration of reception of at least a previous segment and a duration of said at least a previous segment.

Advantageously, the first additional module is configured to receive information about the defined resolutions available for the video segments.

In an embodiment of the invention, the information about the defined resolutions available for the video segments is contained in a manifest file.

The invention also discloses a computer program product, stored on a computer readable medium, configured to decode a compressed video content, said compressed video content comprising at least two groups of pictures, each group of pictures comprising pictures at a defined resolution, said computer program comprising: computer code instructions for receiving an information relative to at least one of a defined resolution and a change of a defined resolution of a first group and a second group of pictures, said first group of pictures having a first defined resolution and said second group of pictures having a second defined resolution different from the first defined resolution; computer code instructions for creating a rescaled frame by re-sampling a frame in the first group of pictures which serves as reference to at least a frame in the second group of pictures, from the first defined resolution to the second defined resolution; computer code instructions for decoding the frame in the second group of pictures using the rescaled frame at the second defined resolution.

A device according to the invention is able to decode video using an adaptive resolution and an Open GOP scheme.

A device according to the invention is able to handle video streams with improved compression efficiency in OTT video delivery while adapting to bandwidth variations.

A device according to the invention is able to select the video resolution that provides the best possible quality for each segment in OTT real time delivery.

### BRIEF DESCRIPTION OF THE DRAWINGS

The invention will be better understood and its various features and advantages will emerge from the following description of a number of exemplary embodiments and its appended figures in which:
- Figure 1a and 1b display two examples of segments of OTT video data according to the prior art, respectively using closed GOP and open GOP scheme;
- Figure 2 illustrates the data needed for performing a switch of resolution in an Open GOP mode according to the prior art;
- Figure 3 illustrates an example of a method in an embodiment of the invention;
- Figures 4a and 4b illustrate two examples of a functional architecture of a decoding device in an embodiment of the invention;
- Figure 5 illustrates an example of a functional architecture of a video reproducing decoding comprising a decoding device in an embodiment of the invention;
- Figure 6a and 6b illustrate the reception of three successive segments of different resolutions, respectively with a reduction of the resolutions between the segments, and an increase of the resolutions between the segments.

Some acronyms used in the technical domain of this application may be used in the description. They are listed in the table below, including their expression and their signification.

| ***Acronym*** | ***Meaning*** |
|---|---|
| AVC | Advanced Video Coding |
| GOP | Group Of Pictures between two I frames in encoding/decoding order |
| HEVC | High Efficiency Video Coding |
| HTTP | HyperText Transfer Protocol |
| IPTV | Internet Protocol Television |
| MPEG | Motion Picture Expert Group |
| MPEG Dash | MPEG Dynamic Adaptive Streaming over HTTP |
| OTT | Over The Top content |
| I Frame | Intra Frame |
| P frame | Prediction Frame |
| B Frame | Bidirectional Frame |
| YUV | Color space commonly used in image or video compression comprising one layer for color intensity (Y) and two layers for color (U and V). |

### DETAILED DESCRIPTION OF THE INVENTION

In this specification, the invention will be described by way of examples relative to OTT video delivery. However the invention is not restricted to OTT delivery and may be used in any application that requires video decoding using an adaptive resolution and Open GOP encoding. For example, the invention may be applicable to streaming applications wherein the encoder is configured for Open GOP encoding and modifies the resolution of the video in relation to any cause, such as variations of bandwidth, or variations of the computing load of the encoding device. It may be also applicable where a decoding device requests delivery of encoded content with a lower resolution, for example to meet an electrical consumption target on the decoding device, and the video is encoded in an Open GOP configuration.

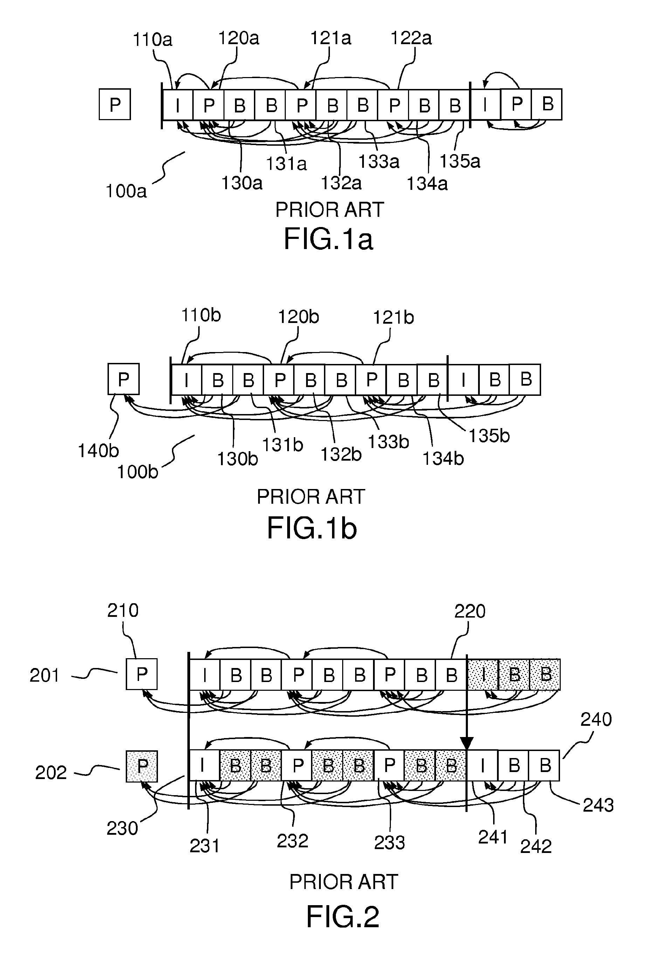

Figure 1 a and 1 b display two examples of segments of OTT video data according to the prior art, respectively using closed GOP and open GOP scheme.

Figure 1 a displays an example of a segment of OTT video data according to the prior art, using a closed GOP scheme.

The segment displayed in figure 1 a is a particular case wherein the segment comprises a single GOP. However segments are not restricted to a single GOP and many of them comprise a plurality of GOPs. GOP 100a comprises a single I frame 110a, three P frames 120a, 121 a and 122a, and six B frames 130a, 131 a, 132a, 133a, 134a and 135a. Each P frame 120a, 121 a and 122a reference a single frame, respectively 110a, 120a and 121 a. On the contrary, each B frame reference two frames: B frames 130a and 131 a reference frames 110a and 120a; B frames 132a and 133a reference frames 121 a and 122; B frames 134a and 135a reference frames 121 a and 122a. All frames in the GOP 100a, including B frames, reference only frames within GOP 100a. Therefore, all information necessary to decode GOP 100a is comprised within GOP 100a, which is the definition of closed GOP. For longer segment comprising more than 1 GOP, this Closed GOP restriction is usually applied, in the state of the art, only for the first GOP of the segment.

It is important to note that figure 1a displays a segment and GOP 100a in decoding order and not the displayed order. Therefore, a first frame which serves as reference to a second frame is always placed left to said second frame, even if it is displayed afterwards. For example, frames 130a and 131 a uses as reference frames 110a and 120a, and frame 120a uses as reference frame 110a. Therefore, frames are represented in the following order: 110a, 120a, 130a and 131 a. Meanwhile, frame 120a is displayed to the user after frames 130a and 131 a. Frames 130a and 131 a are called B-frames for bi-predicted frames because they can use two reference frames for the prediction. The usual way of building bi-prediction is to choose one frame which will be displayed before and one frame which will be displayed after. This property makes the compression of B frames more efficient than the compression of P frames, and much more efficient than the compression of I frames. The maximum number of successive B frames is an important parameter of video encoding. Typical number of successive B frames range from 1 to 7. Indeed, a lower number of B frames leads to a higher proportion of P frames in the video, and therefore lowers the compression efficiency. Meanwhile, a higher number of B frames forces P to use more distant frames as references. More distant frames tend to contain blocks with more significant differences, which makes motion compensation less efficient if the number of successive B frames is too important. A higher number of B frames increases also the latency for the reordering of frames in the display order.

Figure 1b displays a second example of a segment of OTT video data in prior art, using full open GOP scheme.

This Segment comprises a single GOP 100b. GOP 100b comprises a single I frame 110b, two P frames 120b and 121 b, and six B frames 130b, 131 b, 132b, 133b, 134b and 135b. The frame 140b is the last P frame of the GOP in video content that precedes GOP 100b. Unlike GOP 100a, GOP 100b comprises two B frames 130b and 131 b that reference a frame in GOP 100b itself (I frame 110b), but also the frame 140b from a previous GOP. This characteristic is representative of the full Open GOP scheme. Moreover, in this example, frame 140b is also located in the previous segment. In full open GOP scheme, it is also possible to have GOPs comprising only I and B frames. Indeed, in certain video standards such as AVC or HEVC, B frames can be reference pictures for other B frames. Therefore, it is possible to replace P frames with B frames, since a P frame is a particular case of a B frame in which only one single prediction is used.

A full Open GOP scheme has better compression efficiency. Indeed, using the same maximum number of successive B frames (2), GOP 100b has a higher ratio of B frames than GOP 100a: 6 B frames on 9 frames instead of 6 B frames on 10 frames. B frames being encoded more efficiently than I and P frames, this leads to increased compression efficiency. This increased ratio is possible because the use of frame 140b from a previous GOP as reference allows the removal of one P frame in GOP 100b, which corresponds to the frame 122a in GOP 100a. Moreover, the B frames being predicted from a frame of the previous GOP/segment and a frame of the current GOP/segment will generate a smooth transition from the quality level of the last frames of the previous GOP/segment and the quality level of the first frames of the current GOP/segment. This avoids visible Intra refreshments.

Figure 2 illustrates the data needed for performing a switch of resolution in an Open GOP mode according to the prior art.

In this example, an OTT video decoding device can pick segments encoded in two different resolutions, 201 and 202.. Three successive segments are displayed in figure 2. A first and second segments encoded at resolution 201 are respectively noted 210 and 220. The second and third segments, encoded at resolution 202, are respectively noted 230 and 240. The decoder is able to select, for each segment, a resolution that best suits its needs. It may for example switch from resolution 201 to resolution 202 between the second and the third segment. This behavior may be desirable, for example, if resolution 202 is lower than resolution 201, and if the available bandwidth is such that the decoding device is not able anymore to receive segment encoded at resolution 201 in real time.

Video content in figure 2 is encoded using an Open GOP scheme. Therefore, the first B frames group in each segment have reference in previous segments. For example, B frames 242 and 243 in GOP 240 reference I frame 241 within GOP 240, but also P frame 233 in GOP 230. P frame 233 itself uses as reference P frame 232, which uses as reference I frame 231. Therefore, it is not possible in the prior art to display GOP 240 without having received GOP 230. Thus, a switch of resolution in the prior art in Open GOP scheme implies receiving a set of frames twice, and therefore useless data, the frames in segment 230 which are received but not displayed being represented in gray.

. This is particularly problematic when switching to a lower resolution, because the reception of useless data occurs when there is a limited bandwidth for transmission of data.

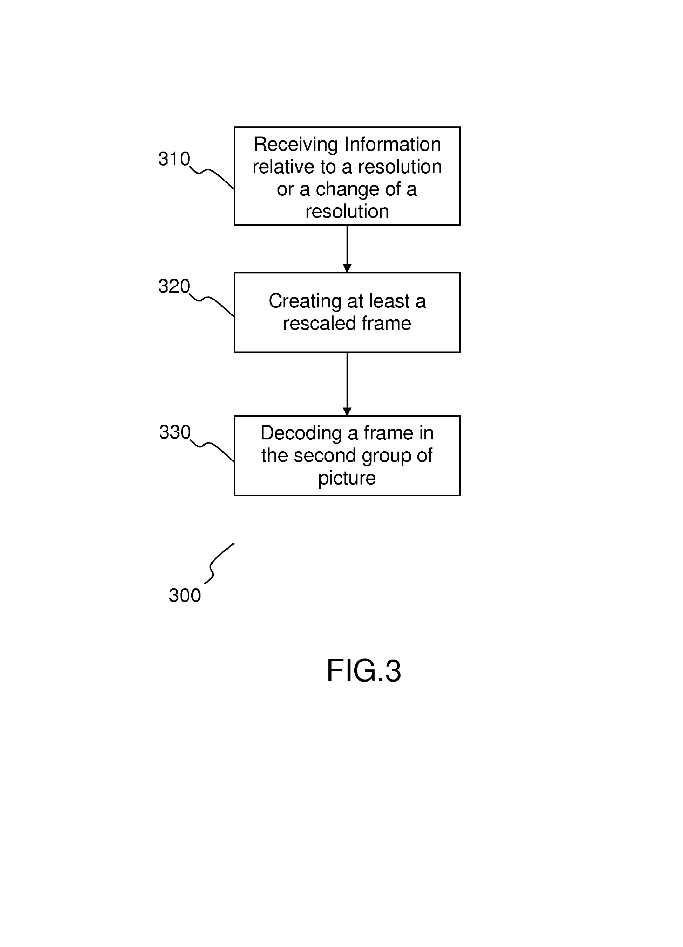

Figure 3 illustrates an example of a method in an embodiment of the invention.

The method, generally denoted 300, aims at decoding a compressed video content. In an embodiment of the invention, video content is received through OTT delivery. In another embodiment to the invention, it is received by streaming. Video content can be compressed using any codec or compression technique that allows bi-predicted frames from reference frames which are displayed before and after these frames. It may for example having been encoded using one of MPEG-2 Video, AVC/H.264, HEVC/H.265, VP8 or VP9 standards. Said video content comprises at least a first GOP and a second GOP, said first GOP having a first defined resolution and said second GOP having a second defined resolution which is different from the first. All pictures in each GOP have the same resolution. Meanwhile, at least one frame in the first GOP serves as reference to at least a frame in the second GOP.

The method comprises a first step 310 for receiving information relative to a resolution or a change of resolution of the GOPs. This information may for example be the resolution of the second GOP, which is different from the resolution of the first GOP. It may also be information about a change of resolution between two GOPs. Resolutions may be expressed using pre-defined standard resolutions, for example 360p, 480, 720p and 1080p, or using values for height and width, for example a number of vertical and horizontal pixels. Many different locations of information relative to a resolution or a change of resolution of the GOPs are also possible. It may for example be included within the compressed video stream, or received as additional information.

At this step there is an inconsistency between the frame in the first GOP which serves as reference to the frame in the second GOP and said frame in the second GOP. Indeed, in standard compression schemes, references between frames mainly consist in predicting blocks or pixels of image in a frame as a weighted combination of blocks or pixels in reference frames. Thus, during the encoding, frames to be encoded make use of frames with the same resolution as reference, in order to properly combine blocks and pixels. On the contrary, the at least a frame in the first GOP which serves as reference to the at least a frame in the second GOP and said at least a frame in the second GOP have different resolutions.

In order to solve this issue, the method 300 comprises a second step 320 for creating at least a rescaled frame by rescaling at least the first frame in the first group of pictures which serves as reference to at least a frame in the second group of pictures, from the first defined resolution to the second defined resolution. If the second defined resolution is higher than the first, said rescaling is an up-scaling. If the second defined resolution is lower than the first, said rescaling is a downscaling. Re-scaling may be performed using any rescaling algorithm or technique. It may for example be performed using one of a bilinear interpolation, a bi-cubic interpolation, nearest neighbor interpolation, polyphase filtering and Lanczos filtering.

Video decoders usually store decoded frames which may serve as reference to further frames. They may be stored in a memory area called decoded pictures buffer. In an embodiment of the invention, the second step is performed in all frames that may serve as reference, for example on all frames within a decoded pictures buffer. This may for example occur before decoding the second GOP or during the decoding of the I-frame of the second GOP, which does not use the reference frames stored in the decoded picture buffer. In this embodiment of the invention, at the beginning of the decoding of said second block, all frames from the first GOP that may serve as reference are already rescaled at the second predefined resolution.

In another embodiment of the invention, rescaling is performed only on frames that currently serve as reference pictures. For example, if a single frame in the first GOP at the first predefined resolution serves as reference to a frame in the second GOP at the second predefined resolution, only this single frame may be rescaled prior to decoding the frame in the second GOP.

The method 300 comprises a third step 330 for decoding the frame in the second GOP using the at least the rescaled frame at the second defined resolution. Since the resolution of both the frame in the second GOP and the rescaled frame are the second predefined resolution, decoding can occur without error. Rescaled frame may for example be used at the input of a motion compensation method in order to predict the content of blocks of the second frame.

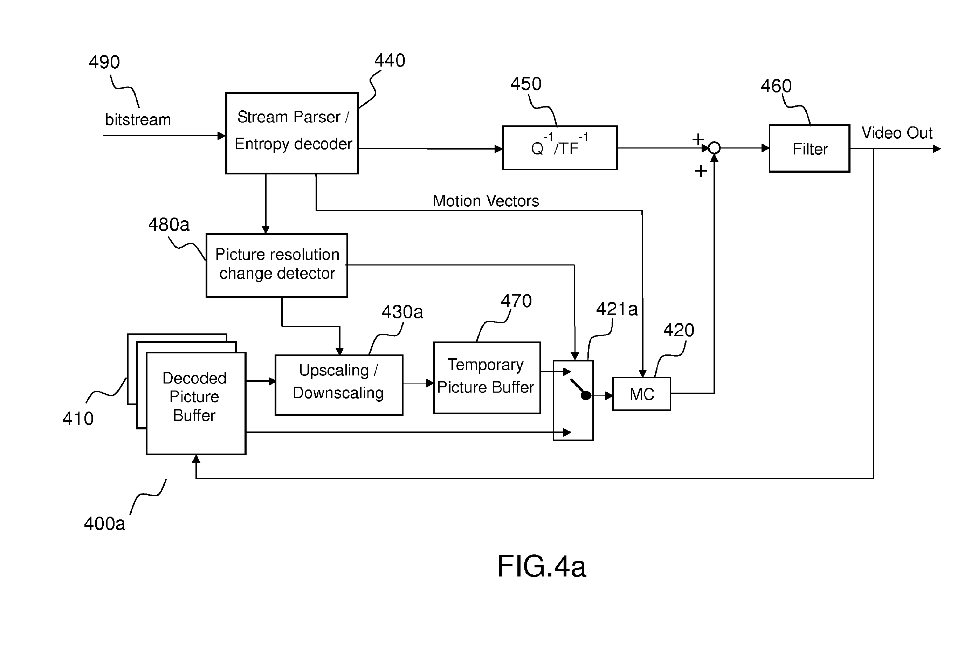

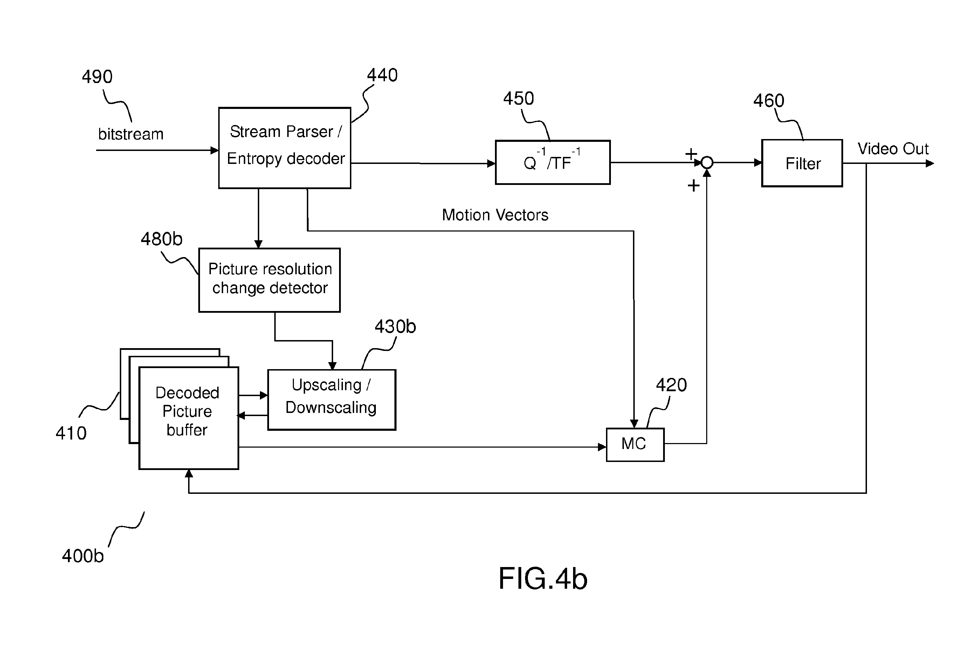

Figures 4a and 4b illustrate two examples of a functional architecture of a decoding device in an embodiment of the invention.

Figure 4a illustrates an example of a functional architecture of a decoding device in an embodiment of the invention.

A decoding device 400a is configured to decode a compressed video content. In an embodiment of the invention, video content is received through OTT delivery. In another embodiment to the invention, it is received by streaming. Video content can be compressed using any codec or compression technique that allows bi-predicted frames from reference frames which are displayed before and after these frames. It may for example have been encoded using one of MPEG-2 Video, AVC/H.264, HEVC/H.265, VP8 or VP9 standards. Said video content comprises at least a first GOP and a second GOP, said first GOP having a first defined resolution and said second GOP having a second defined resolution which is different from the first. All pictures in each GOP have the same resolution. Meanwhile, at least one frame in the first GOP serves as reference to at least a frame in the second GOP.

The decoding device 400a comprises a first buffer 410 configured to store decoded frames that may serve as reference. In some decoders such buffer is called a decoded pictures buffer. In an embodiment of the invention, decoded frames are in YUV form, wherein the value of each pixel in each color layer is directly stored.

The decoding device 400a further comprises a first module 420 configured to perform a motion compensation. This module is configured to compute motion between previously decoded or decoded/rescaled pictures and a current picture to decode.

The decoding device 400a further comprises a second module 430a configured to, upon reception of an information relative to defined resolutions or a change of defined resolutions of a first group and a second group of pictures, said first group of pictures having a first defined resolution and said second group of pictures having a second defined resolution different from the first defined resolution, create at least a rescaled frame by performing a rescaling of at least a frame in the first group of pictures which serves as reference to at least a frame in the second group of pictures, from the first defined resolution to the second defined resolution.

In an embodiment of the invention, the second module 430a is configured to perform an up-scaling if the second predefined resolution is higher than the first, and a downscaling if the second predefined resolution is lower than the first. The second module 430a can use any known method if rescaling, for example a bilinear interpolation, bi-cubic interpolation, nearest neighbor, polyphase filtering or Lanczos filtering.

A decoding device according to the invention is remarkable in that it is configured to decode the second frame using the at least a rescaled frame.

In an embodiment of the invention, the rescaled frame is stored in a second buffer 470 different from the first buffer 410. The motion compensation module 420 is configured to use a frame from the first buffer 410, if a frame to decode and a reference frame have the same resolution, or the second buffer 470, if their respective resolutions are different. In an embodiment of the invention, the second module 430a is configured to rescale all frames from the first buffer 410 to the second buffer 470. In another embodiment of the invention, the second module 430a is configured to rescale only the frames that serve as reference to a frame to decode.

The decoding device may comprise a third module 440 configured to parse an input bitstream and perform entropy decoding. Parsing operation permits the analysis of an input bitstream 490 and the retrieval of encoded frames. The analysis of bitstream extracts information about frames from the bitstream, for example the nature (I, P or B) of frames as well as their resolutions. In order to decode a frame, the third module 440 is notably configured to entropy decode data relating to the frame, and output motion vector to the motion compensation module 420 and transformed blocks and macro-blocks to a fourth module 450.

A fourth module 450 is configured to perform inverse quantization and inverse transform on residual blocks. The fourth module 450 is therefore configured to output differences between a current frame to decode and the output of the first module 420. These two outputs are then merged at the input of a fifth module 460.

A fifth module 460 is configured to perform filtering on the image, for example to lower blocking artifacts. The frame at the output of the fifth module 460 can then be displayed on a screen.

The first module 420, third module 440, fourth module 450 and fifth module 460 are well known by a skilled man, and are commonly used in video decoders, especially decoders configured to decode video compressed using one of MPEG-2, AVC/H.264 or HEVC/H.265 video standards.

In an embodiment of the invention, the decoding device 400a comprises a sixth module 480a configured to detect a change of resolution at the output of stream analysis. The detection of the change of resolution may for example be performed by comparing the resolution of a frame and the resolutions of previous frames. It is also possible to detect a change of resolution if the stream contains information about the change of resolution, for example a metadata. In an embodiment of the invention, the module 480a is configured to provide to the module 430a relevant parameters to change the resolution, and the module 430a is configured to rescale frames from buffer 410 to buffer 470. The parameters for rescaling may for example be the first and the second resolutions. It may also be a ratio between the two resolutions. The sixth module 480a is also configured to control a switch 421 a that selects for the motion compensation module 420 the right buffer to use to get reference frames amongst the first buffer 410 and the second buffer 470.

The embodiment displayed in figure 400a is advantageous because it eases the multithreading of video decoding. Indeed the second module 430a is able to perform rescaling from the first buffer 410 to the second buffer 470, while the frames in the buffer 410 are used by the first module 420.

The figure 4b illustrates a second example of video decoding device according to a second embodiment of the invention.

The decoding device 400b comprises a buffer first 410 similar to that of the decoding device 400a, a first module 420 similar to that of the decoding device 400a, a second module 430b configured to perform rescaling, a third module 430, fourth module 450 and fifth module 460 similar to those of the decoding device 400a, and a sixth module 480b configured to detect changes in resolution.

In the decoding device 400b, the second module 430b is configured to perform rescaling within buffer 410. When a change of resolution is detected, the second module 430b is configured to replace a decoded frame at the first defined resolution by a rescaled frame at the second defined resolution within the same buffer 410. Therefore, frames at the first defined resolution in buffer 410 are replaced by frames at the second defined resolution. The first module 420 is configured to perform motion compensation using reference frames in the first buffer 410, said frames always being at the resolution of the current frame to decode.

In an embodiment of the invention, the second module 430b is configured to rescale all frames from the first buffer 410. In another embodiment of the invention, the second module 430b is configured to rescale only the frames that serve as reference to a frame to decode.

This embodiment of the invention is advantageous because the device 400b does not need to contain a second buffer 470, and the first module 420 does not need to be configured to select reference frames from two different buffers. This embodiment therefore saves memory. Though, if decoded frames in the first defined resolution have been stored in contiguous areas of the buffer and that second defined resolution is larger, the replacement of the decoded frames needs to be done carefully and the pointers, which define the area where a decoded frame is stored, needs to be updated.

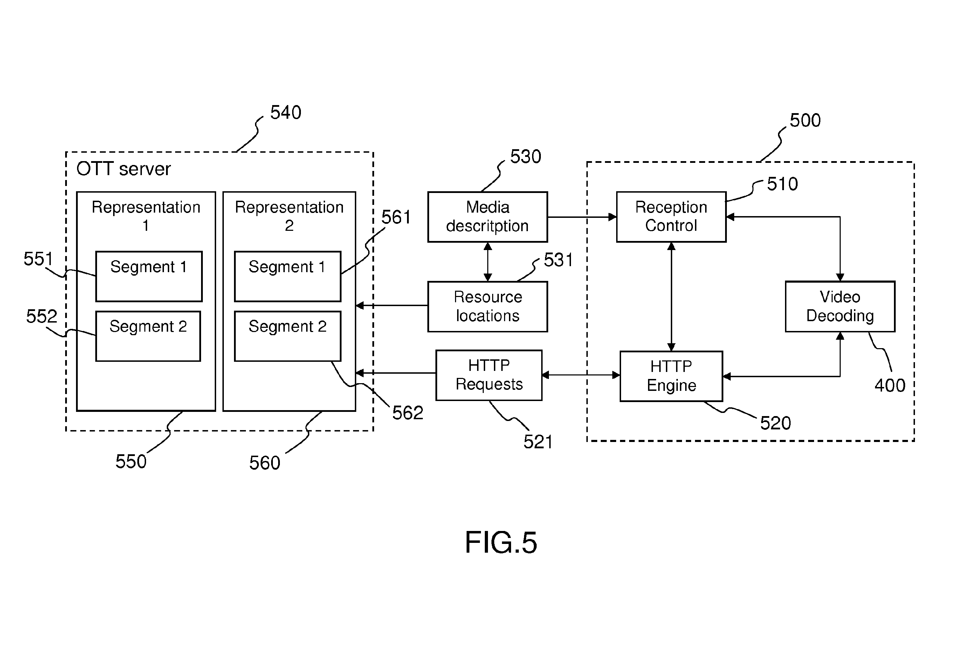

Figure 5 illustrates an example of a functional architecture of adaptive streaming system including a video reproducing device 500 comprising a decoding device according to an embodiment of the invention.

This example relates to OTT delivery. In this example a video reproducing device 500 comprises the decoding device 400. In addition, it comprises a first additional module 510 configured to control the reception of OTT video content. In an embodiment of the invention, the first additional module 510 is configured to control the reception of video content, for example the control of video segments. In an embodiment of the invention the first additional module 510 is configured to receive a description 530 of the media to play, which contains a description of video content. The description 530 of the media may contain a list of available representations, wherein each representation is characterized by encoding parameters, such as bitrate or resolution. Each segment of video data is therefore available in all representations. The first additional module is configured to select the best representation for each segment of video content. In an embodiment of the invention, the media description 530 is a manifest file that contains the description of all available representations. The manifest file may for example comply with the MPEG Dash standard.

In an embodiment of the invention, the first additional module 510 selects the best representation for each segment of video data according to an evaluation of the available bandwidth. In an embodiment of the invention, the evaluation of available bandwidth is performed based on the time of reception of the last segment. This embodiment is advantageous, because it allows a reliable evaluation of the available bandwidth and the reception of the video with the highest quality available for real time display.

In an embodiment of the invention, the media description 530 permits the retrieval of a set of locations of resources 531. The location of resources represents the place where to retrieve each segment in each representation on an OTT server 540. In the example depicted in figure 5, the OTT server 540 generates segments according to a first representation 550 and a second representation 560. In the case of live display, successive segments are encoded and stored in real time. For example at the beginning of a program two segments 551 and 552 may have been created according to the first representation 550 and two segments 561 and 562 according to the second representation 560. As soon as enough video content is available, new segments are encoded and stored for each representation on the server 540. The media description 530 permits the retrieval of the relevant resource location among resource locations 531 for each representation and display time in the program.

Once the first additional module 510 has determined the location of a segment to retrieve, it passes control to a second additional module 520 configured to access and receive video using an http protocol. The second additional module 520 is configured to generate http requests 521 to access and receive video segments, for example video segments 551, 552, 561 or 562 in the server. Once a segment has been received, video decoding modules 400 can decode and display the video content.

In an embodiment of the invention, the second additional module 520 is further configured to compute the receiving time for each segment, in order to provide to the first additional module 510 an indication of the available bandwidth.

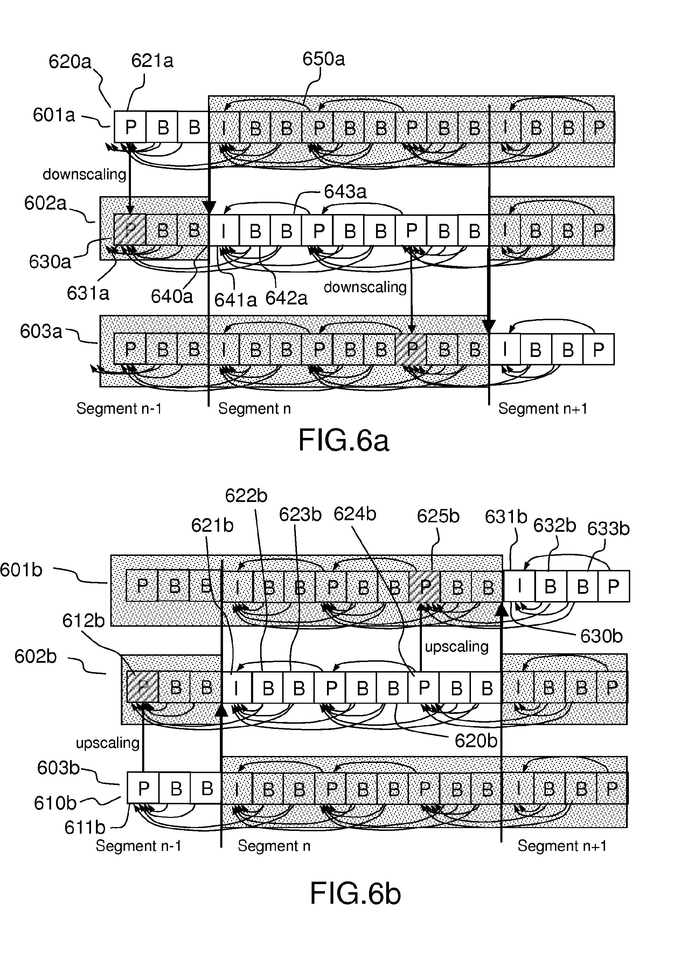

Figures 6a and 6b illustrate the reception of three successive segments of different resolutions, respectively with a reduction of the resolution between the segments, and an increase of the resolution between the segments. All frames are represented in decoding order.

Figure 6a illustrates the reception of three successive segments of different resolutions, with a reduction of the resolutions between the successive segments.

In this example, an OTT video content is available in three resolutions 601 a, 602a and 603a, the highest resolution being 601 a and the lowest 603a. Three segments, each containing one GOP, are represented. In figure 6a, 620a represents the first segment in resolution 601 a, its last P frame being frame 621 a. 630a represents the first segment in resolution 602a, its last P frame being frame 631 a. 640a represents the second segment in resolution 602a. The video is encoded in Open GOP, and frames 642a and 643a in segment 640a reference both frame 641 a in segment 640a and frame 631 a in segment 630a. 650a represents the second segment in resolution 601 a.

In an exemplary embodiment of the invention, a video reproducing device switches from defined resolution 601 a to defined resolution 602a, for example because of a reduction of available bandwidth. Decision of switching resolution may for example be performed in a module 510 of device 500, upon the reception time of segment 620a.

Frames 642a and 643a were encoded with reference to frames 641 a and 631 a. Frame 631 a being unavailable since only segments 620a and 640a were received, a device according to the invention is configured to downscale frame 621 a from resolution 601 a to resolution 602a in order to obtain a rescaled frame similar to frame 631 a, and decode frames 642a and 643a with reference to rescaled frame.

The same scheme applies for the switch between the representation 602a and the representation 603a.

This example demonstrates that a video decoding device is able to decode video in open GOP and with an adaptive resolution without downloading useless data.

Figure 6b illustrates the reception of three successive segments of different resolutions, with an increase of the resolutions between the successive segments.

In this example, an OTT video content is available in three resolutions, 601 b, 602b and 603b, the highest resolution being 601 b and the lowest 603b. Three segments, each containing one GOP, are represented. In this example, video decoding device receives a first segment 610b at defined resolution 603b, a second segment 620b at a higher defined resolution 602b, and a third segment 630b at a higher defined resolution 601 b. This increase in resolution may for example occur if the available bandwidth increases.

Frames 623b and 622b within the second segment at resolution 602b have been encoded with references to both the frame 621 b in the same segment and the frame 612b in the first segment at resolution 602b. Meanwhile, frames 633b and 632b within the third segment at resolution 601 b have been encoded with references to both the frame 631 b in the same segment and the frame 625b in the second segment at resolution 601 b. Similarly to the example depicted in figure 6a, a decoding device according to the invention is configured to decode and upscale frame 611b in segment 610b to the resolution 602b, then use the rescaled frame instead of frame 612b as reference for decoding frames 623b and 622b. A decoding device according to the invention is also configured to decode and upscale frame 624b in segment 620b to the resolution 601 b, then use the rescaled frame instead of frame 625b as reference for decoding frames 632b and 633b.

This example demonstrates that it is possible in the invention to change the resolution of video content as many times as needed. All combinations of resolution switch between segments are possible, including the switch from a first to a second resolution, and back to the first.

The examples described above are given as illustrations of embodiments of the invention. They do not in any way limit the scope of the invention which is defined by the following claims.

## Claims

1. A method (300) for decoding a compressed video content, said compressed video content comprising two groups of pictures, each group of pictures comprising pictures at a defined resolution, said method comprising:
- a first step (310) for receiving an information relative to at least one of a defined resolution and a change of a defined resolution between a first group and a second group of pictures, said first group of pictures having a first defined resolution and said second group of pictures having a second defined resolution different from the first defined resolution;
- a second step (320) for creating a rescaled frame by rescaling a frame in the first group of pictures which serves as reference to at least a frame in the second group of pictures, from the first defined resolution to the second defined resolution;
- a third step (330) for decoding the frame in the second group of pictures using the rescaled frame at the second defined resolution.

2. The method of claim 1, wherein the second step comprises an up-scaling if the second defined resolution is higher than the first defined resolution, and a downscaling if the second defined resolution is lower than the first defined resolution.

3. The method of one of claims 1 and 2, wherein the re-scaling is performed using an algorithm comprised in a group of algorithms comprising at least one of a bilinear interpolation, bi-cubic interpolation, nearest neighbor interpolation, polyphase filtering and Lanczos filtering.

4. The method of one of claims 1 to 3, wherein the third step comprises the use of a rescaled frame at the input of a motion compensation method.

5. The method of one of claims 1 to 4, wherein the second step comprises re-scaling all decoded frames present in a decoded pictures buffer of a video decoder.

6. The method of one of claims 1 to 5, wherein the frame in the second group of pictures is compressed using a motion compensated Inter-frame prediction algorithm.

7. The method of one of claims 1 to 6, wherein the video content is compressed using a standard comprised in a group of video standards comprising MPEG-2 Video, AVC/H.264, HEVC/H.265, VP8, VP9.

8. A video decoding device (400a, 400b) configured to decode a compressed video content, said compressed video content comprising two groups of pictures, said video decoding device comprising:
- a first buffer (410) configured to store decoded frames;
- a first module (420) configured to perform a motion compensation;
- a second module (430a, 430b) configured to:
- receive an information relative to at least one of a defined resolution and a change of a defined resolution of a first group and a second group of pictures, said first group of pictures having a first defined resolution and said second group of pictures having a second defined resolution different from the first defined resolution;
- create at least a rescaled frame by performing a rescaling, from the first defined resolution to the second defined resolution, of at least a frame in the first group of pictures which serves as reference to at least a frame in the second group of pictures;
said video decoding device being further configured to decode the at least a frame in the second group of pictures using the at least a rescaled frame at the second defined resolution.

9. The video decoding device of claim 8, further comprising one of:
- a third module (440) configured to perform entropy decoding;
- a fourth module (450) configured to perform at least one of an inverse quantization and an inverse transform;
- a fifth module (460) configured to perform filtering:
wherein the output of the second module is input to the fifth module.

10. The video decoding device of one of claims 8 and 9, wherein the output of the second module (430a) is stored in a second buffer (470).

11. A video reproduction device comprising a video decoding device according to one of claims 8 to 10, the video reproduction device further comprising :
- a first additional module (510) configured to control reception of the video content;
- a second additional module (520) configured to one of access and receive video content using an internet protocol.

12. The video reproducing device of claim 11 wherein the first additional module (510) is configured to monitor reception of segments of video content whose resolution depends of an evaluation of the available bandwidth.

13. The video reproducing device of one of claims 11 and 12, wherein the first additional module (510) is configured to adapt resolution of segments according to a duration of reception of at least a previous segment and a duration of said at least a previous segment.

14. The video reproducing device of one of claims 11 to 13, wherein the first additional module (510) is configured to receive information (530) about the defined resolutions available for the video segments.

15. The video reproducing device of claim 14, wherein the information (530) about the defined resolutions available for the video segments is contained in a manifest file.

16. A computer program product, stored on a computer readable medium, configured to decode a compressed video content, said compressed video content comprising at least two groups of pictures, each group of pictures comprising pictures at a defined resolution, said computer program comprising:
- computer code instructions for receiving an information relative to at least one of a defined resolution and a change of a defined resolution of a first group and a second group of pictures, said first group of pictures having a first defined resolution and said second group of pictures having a second defined resolution different from the first defined resolution;
- computer code instructions for creating a rescaled frame by re-sampling a frame in the first group of pictures which serves as reference to at least a frame in the second group of pictures, from the first defined resolution to the second defined resolution;
- computer code instructions for decoding the frame in the second group of pictures using the rescaled frame at the second defined resolution.
